# EUROPÄISCHE PATENTSCHRIFT

(11) **EP 1 352 984 B1**
(45) Veröffentlichungstag und Bekanntmachung des Hinweises auf die Patenterteilung: **30.04.2008**
(21) Anmeldenummer: 03006625.2
(22) Anmeldetag: 25.03.2003
(51) Int. Cl.: C22C 47/20, C22C 47/08, C22C 47/04

(54) **Verfahren zur Herstellung von faserverstärktem Halbzeug in Form von Metallbändern, Metallblechen oder dergleichen sowie Vorrichtung zur Durchführung des Verfahrens**
Process and device for preparing fibre reinforced semi-finished products in the form of metal sheets or strips
Procédé et installation pour la préparation d'ébauches renforcées de fibres sous forme de feuilles ou de bandes métalliques

(30) Priorität: 11.04.2002 DE 10215999
(43) Veröffentlichungstag der Anmeldung: 15.10.2003
(73) Patentinhaber: Daimler AG, 70327 Stuttgart (DE); MTU Aero Engines GmbH, 80995 München (DE)
(72) Erfinder: Andrees, Gerhard, 81243 München (DE); Fietzek, Heiko, 83209 Pfrien (DE); Heutling, Falko, Dr., 81377 München (DE); Kopperger, Bertram, 85241 Herbertshausen (DE); Wehr, Jürgen, 85521 Ottobrunn (DE)

(56) Entgegenhaltungen:
- DE-A1- 2 147 735
- US-A- 3 936 277
- US-A- 5 353 981
- US-A- 5 968 671
- US-A- 6 064 031

## Beschreibung

Die Erfindung betrifft ein Verfahren zur Herstellung von faserverstärktem Halbzeug in Form von Metallbändern gemäß der im Oberbegriff des Anspruches 1 angegebenen Art.

Ein derartiges Verfahren zur Herstellung von faserverstärkten Folien, Blechen oder Bändern mit einer Metallmatrix ist aus der US-PS 4,733,816 und der US-PS 4,499,156 bekannt. Dabei wird die Metallmatrix mit einer Vorrichtung, wie sie die US-PS 3,841,942 offenbart, zwischen und auf die Fasern heißgepresst. Als Fasern werden Siliziumkarbidfasern, siliziumbeschichtete Siliziumkarbidfasern, siliziurnkarbidbeschichtete Borfasern oder borkarbidbeschichtete Borfasern verwendet. Als Matrixmetall stehen ausschließlich Titanbasislegierungen zur Verfügung.

Die letztlich aus faserverstärkten Folien, Blechen oder Bändern entstehenden Bauteile werden auch als Metal-Matrix-Components (MMC's) bezeichnet.

Das bekannte Verfahren zur Herstellung von faserverstärkten Folien, Blechen oder Bändern hat den Nachteil, dass es relativ aufwendig ist, da es mehrere Schritte zum Aufbau der Faser-/Folienstruktur umfasst. Ferner sind der erzielbare Faservolumenanteil und die resultierenden mechanischen Eigenschaften begrenzt, da die dichteste Anordnung von Fasern nicht erreicht werden kann. Zudem kann der Abstand zwischen den Fasern nicht konstant gehalten werden und Faserberührung und Faserbruch ist nicht auszuschließen. Die gezielte Ausrichtung der Fasern in die benötigten Richtungen ist ebenfalls nur begrenzt möglich. Dies führt u. a. zu Ermüdungsrissen, geringere Bruchsicherheit und einer verkürzten Lebenszeit der aus den faserverstärkten Folien/ Blechen hergestellten MMC's

Das Dokument US-A-6 064 031 schützt ein Verfahren zur Herstellung von lokalen Bauteilverstärkungen in MMC-Bauweise (Metal Matrix Composites), d.h. mit gerichteten, vorzugsweise faserförmigen Verstärkungsefementen in einer Metallmatrix. Dabei kann die Bauteilverstärkung in Situ an der zu verstärkenden Stelle des Bauteils hergestellt werden, oder es kann separat eine Vorform/ein Halbzeug hergestellt, passgenau bearbeitet und dann in das Bauteil integriert werden. Ein spezielles Merkmal des geschützten Verfahrens besteht darin, dass die Verstärkungselemente in ein Metallpulver eingebettet werden, das aufgeschmolzen wird und nach Erstarrung die Metallmatrix bildet. Die Schritte Faserauflegen, Einbetten in Metallpulver, Aufschmelzen mit Nochenergiestrahlung und Erstarren können mehrfach wiederholt werden, um letztlich ein mehrlagig verstärktes MMC-Laminat zu erzeugen, De facto handelt es sich hier um ein Legeverfahren, bei dem die Fasern als statische Lagen auf einen Träger aufgebracht, sowie dort eingebettet und konsolidiert werden.

Der Erfindung liegt die Aufgabe zugrunde, ein Verfahren und eine Vorrichtung zur Herstellung von faserverstärktem Halbzeug in Form von Metallbändern gemäß der im Oberbegriff des Anspruches 1 angegebenen Art derart weiterzubilden, dass unter Vermeidung der genannten Nachteile ein kostengünstiges Verfahren angegeben wird, bei dem die Verstärkungsfasern in eine vorbestimmte exakte Anordnung innerhalb der Matrix des Halbzeugs gebracht werden.

Diese Aufgabe wird durch die kennzeichnenden Merkmale des Anspruches 1 in Verbindung mit seinen Oberbegriffsmerkmalen gelöst.

Der Erfindung liegt die Erkenntnis zugrunde, dass sich durch ein Schweißverfahren die Verstärkungsfasern und ein die spätere Matrix des Halbzeugs bildendes Metall auf einfache Art und Weise in eine vorbestimmte bleibende Anordnung bringen lassen.

Nach der Erfindung durchlaufen daher ein Metall und die Verstärkungsfasern zumindest bereichsweise ein Schweißverfahren, bei dem eine Verbindung durch ein flächlges Aufschmelzen des Metalls zu einer die Verstärkungsfasern umgebenden Matrix erfolgt wobei ein Energiestrahlschweißverfahren mittels einer stationären Strahlenkanone verwendet wird, die von den Verstärkungsfasern und dem Metall kontinuierlich durchlaufen wird.

Als Schweißverfahren wird vorzugsweise ein Laserschweißverfahren oder ein Elektronenstrahlschweißverfahren verwendet. Hierbei handelt es sich um Standardschweißverfahren, die die Herstellungskosten erheblich reduzieren.

Die Verstärkungsfaser wird vor dem Schweißverfahren mit einem Metallmantel versehen, der nach dem Schweißvorgang das Metall der Matrix bildet.

Alternativ hierzu werden vor dem Schweißverfahren mehrere Verstärkungsfasern parallel zwischen zwei Metallfolien angeordnet, wobei zwischen den einzelnen Verstärkungsfasern noch jeweils ein zusätzlicher Metalldraht eingebracht wird. Diese Anordnung hat den Vorteil, dass auf das vorherige Aufbringen eines Metallmantels auf die Verstärkungsfaser verzichtet werden kann.

Ein gleichmäßiges Aufschmalzen von Metallfolie und Metalldraht kann durch Verwendung des gleichen Metalls für die Metallfolie als auch den Metalldraht gewährleistet werden.

Vorzugsweise erfolgt nach dem Schweißvorgang eine Konsolidierung des Halbzeugs, um eine homogene Matrix zu gewährleisten.

Die Konsolidierung kann beispielsweise durch ein heissisostatisches Pressen als auch durch ein uniaxiales Heißpressen erfolgen.

Als Metall kommen grundsätzlich alle schweißbaren Metalle/Metall-Legierungen in Frage, insbesondere Titan und Titanbasislegierungen.

Sämtliche bekannte Faserarten können als Verstärkungsfasern verwendet werden. Die Verstärkungsfasern umfassen dabei die Elemente Silizium (Si), Kohlenstoff (C), Bor (B), Sauerstoff (O), Aluminium (Al) und/oder Stickstoff (N).

Weitere Vorteile und Merkmale ergeben sich aus der Beschreibung mehrerer Ausführungsformen der Erfindung im Zusammenhang mit der Zeichnung. Es zeigen:
- Fig.1: eine schematische Ansicht der prinzipiellen Herstellung eines Halbzeugs aus mehreren Verstärkungsfasern mit einem Metallmantel;
- Fig. 2: eine Übersicht der Darstellung des Herstellungsverfahrens von Fig. 1;
- Fig. 3: eine Detailansicht von Fig. 2;
- Fig. 4: eine zweite Ausführungsform zur Herstellung eines Halbzeugs aus mehreren Verstärkungsfasern mit einem Metallmantel und Metallfolien;
- Fig. 5: eine dritte Ausführungsform zur Herstellung eines Halbzeugs aus mehreren Verstärkungsfasern, Metalldrähten und Metallfolien;

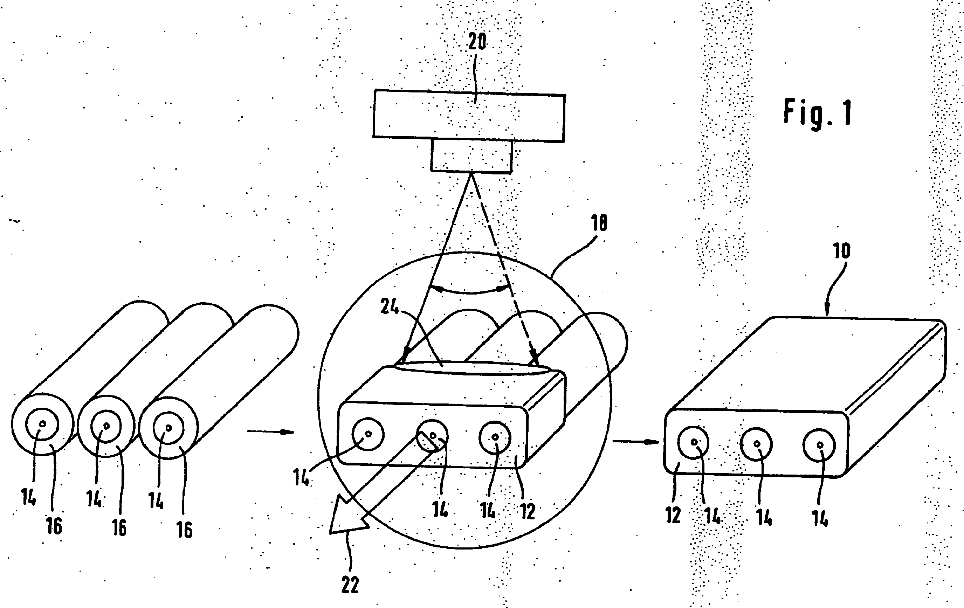

In Fig. 1 ist in einer schematischen Darstellung die Herstellung eines Halbzeugs 10 in Form einer einzelnen mit einer Matrix 12 aus Metall verbundenen Lage aus Verstärkungsfasern 14 dargestellt. Die Verstärkungsfasern 14 wurden mittels eines bekannten PVD-Verfahrens (PVD = physical vapour deposition) mit einem Metallmantel 16 versehen, der den Werkstoff der späteren Matrix 12 bildet. Der Metallmantel 16 weist im Querschnitt eine im Wesentlichen gleiche Dicke auf.

Mehrere Verstärkungsfasern 14 mit einem Metallmantel 16 werden nun eng anliegend in einem Bereich 18, in dem im Hinblick auf das Metall des Metallmantels 16 bzw. der Matrix 12 eine Atmosphäre ohne reaktiver Gase herrscht, zusammengeführt. Der Übersicht halber sind in Fig. 1 nur drei Verstärkungsfasern dargestellt.

In diesem Bereich 18 wirkt eine Strahlenkanone 20, die die in Vorschubrichtung 22 bewegten Verstärkungsfasern 14 mit ihrem Metallmantel 16 in einem Schweißbereich 24 mittels eines Energiestrahl-Schweißverfahrens miteinander verbindet. Im Schweißbereich 24 wird das die Verstärkungsfasern 14 umgebende Metall aufgeschmolzen, so dass die Matrix 12 gebildet wird. Im vorliegenden Ausführungsbeispiel sind die Verstärkungsfasern 14 anschließend entlang ihrer ganzen Länge über die Matrix 12 miteinander verbunden und in einer vorbestimmten Anordnung in der Matrix 12, nämlich in regelmäßigem Abstand sowie parallel zueinander, ausgerichtet.

Als Schweißverfahren kann ein Energiestrahlschweißverfahren, ein Laserschweißverfahren oder ein Elektronenstrahlschweißverfahren verwendet werden. Die Atmosphäre ist Vakuum beim Elektronenstrahlschweißen oder eine Inertgas-Atmosphäre beim Laserstrahlschweißen.

Durch diese Atmosphäre wird die Oxidation und Verschmutzung der Matrix 12 vermieden.

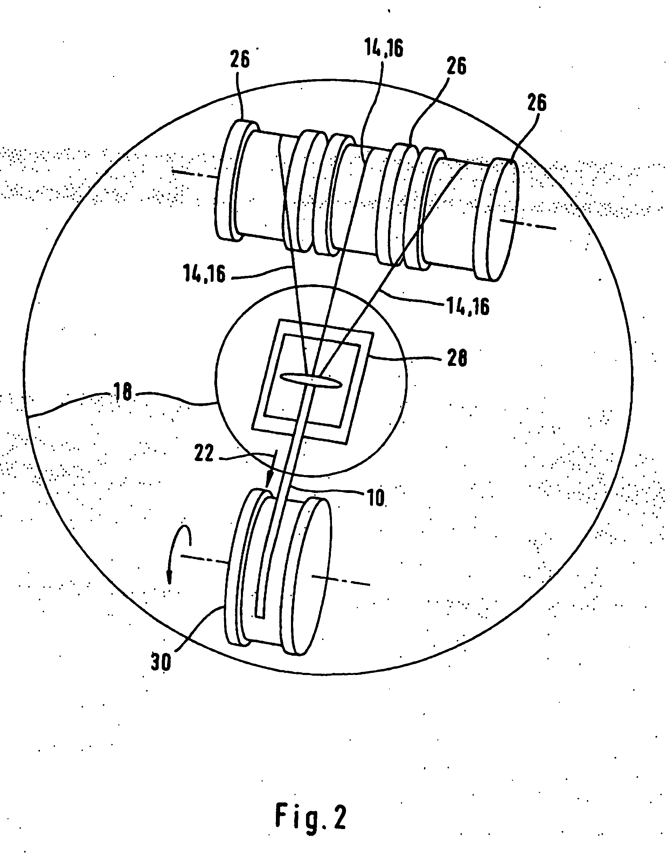

In Fig. 2 ist die Zufuhr der einen Metallmantel 16 aufweisenden Verstärkungsfasern 14 in den Schweißbereich 24 dargestellt.

Die einen Metallmantel 16 aufweisenden Verstärkungsfasern 14 werden von Rollen 26 abgezogen und einer Führungsvorrichtung 28 zugeführt, in der sich auch der Schweißbereich 24 befindet. Das hergestellte Halbzeug 10 wird nach dem Schweißverfahren zur Lagerung und zum Transport auf eine weitere Rolle 30 aufgewickelt.

Der Bereich 18 mit einer Atmosphäre ohne reaktive Gase kann dabei die Führungsvorrichtung 28 mit dem Schweißbereich 24 umfassen oder aber auch den gesamten Prozess vom Abwickeln der einen Metallmantel 16 aufweisenden Verstärkungsfasern 14 von den Rollen 26 über die Führungsvorrichtung 28 bis zum Aufwickeln des Halbzeugs 10 auf die Rolle 30.

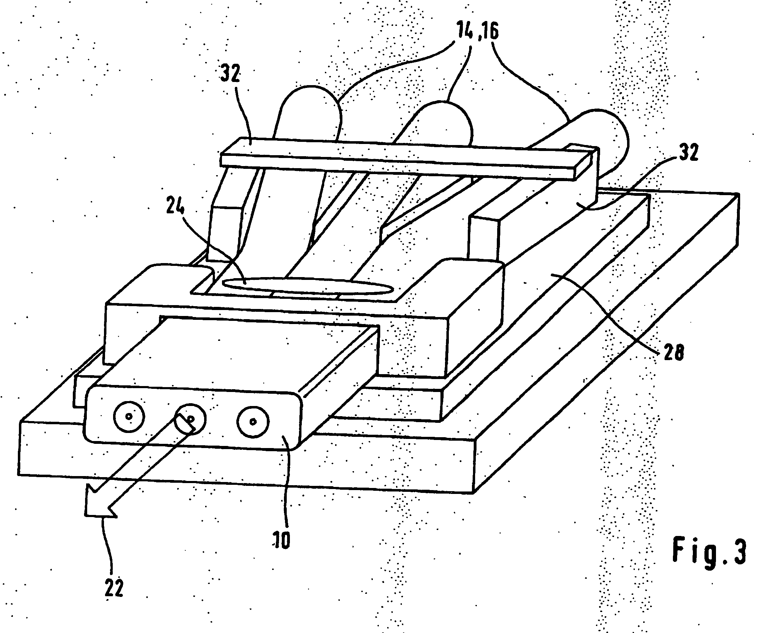

In Fig. 3 ist die Führungsvorrichtung 28 im Detail dargestellt. Die Führungsvorrichtung 28 weist Führungsstege 32 auf, mit deren Hilfe die einen Metallmantel 16 aufweisenden Verstärkungsfasern 14 zielgerichtet in den Schweißbereich 24 geführt werden. Die Führungsvorrichtung 28 kann bei Bedarf gekühlt werden, um die Verstärkungsfasern 14 möglichst gering mit Wärme zu belasten.

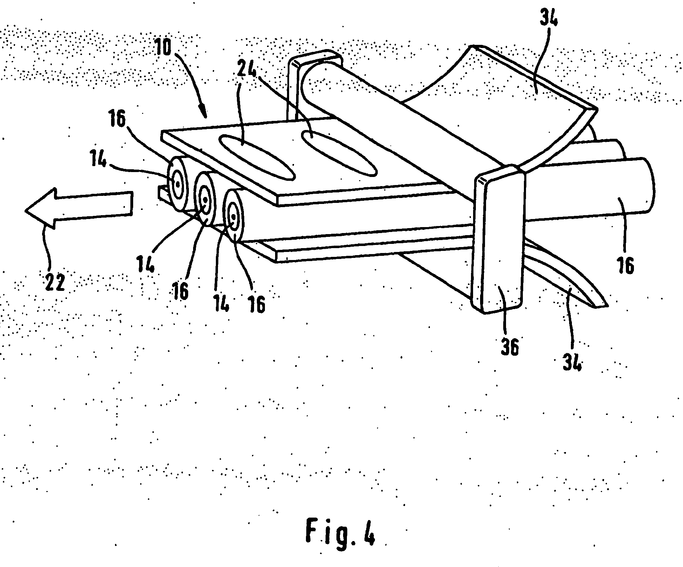

In Fig. 4 ist eine weitere Ausführungsform der Erfindung dargestellt. Hier wird ein Halbzeug 10 aus mehreren parallel angeordneten, einen Metallmantel 16 aufweisenden Verstärkungsfasern 14 und zwei Metallfolien 34 hergestellt. Das Metall des Metallmantels 16 entspricht dabei dem Metall der Metallfolien 34. Das Ganze wird wiederum einer Führungsvorrichtung 36 zugeführt, in der die Metallfolien 34 und die Metallmäntel 16 der Verstärkungsfasern 14 miteinander verschweißt werden. Das aufgeschmolzene Metall der Metallfolien 34 und der Metallmantel 16 der Verstärkungsfasern bilden die Matrix 12 des Halbzeugs. Um eine homogene Matrix 12 des Halbzeugs 10 zu erhalten, kann als weiterer Arbeitsschritt eine Konsolidierung, beispielsweise durch ein heissisostatisches Pressen, durchgeführt werden.

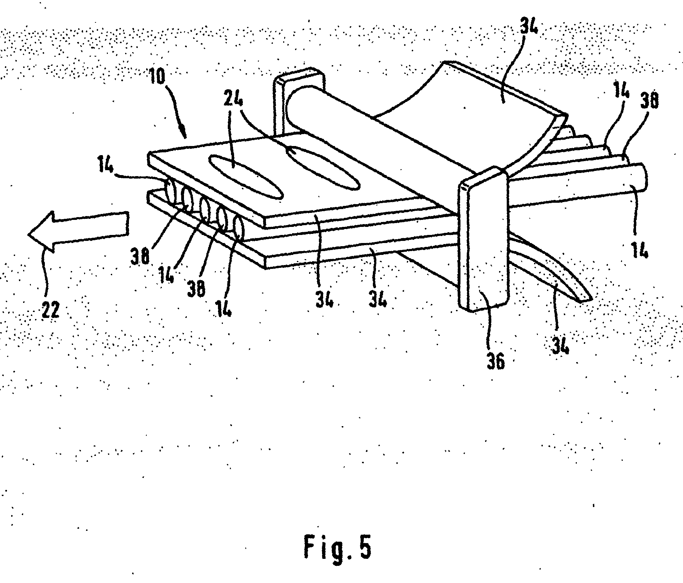

Eine weitere Ausführungsform ist in Fig. 5 dargestellt. Im Gegensatz zu dem vorherigen Ausführungsbeispiel sind zwischen den beiden Metallfolien 34 abwechselnd Verstärkungsfasern 16 und Metalldrähte 38 eingebracht. Das Ganze, nämlich Metallfolien 34, Verstärkungsfasern 16 und Metalldrähte 38, wird wiederum einer Führungsvorrichtung 36 zugeführt und anschließend verschweißt, wobei die Matrix 12 durch Verschmelzen der zwischen den Verstärkungsfasern 14 eingebrachten Metalldrähte 38 und den Metallfolien 34 gebildet wird. Eine vorherige Beschichtung der Verstärkungsfasern 14 mit einem Metallmantel 16 ist nicht mehr erforderlich.

## Patentansprüche

1. Verfahren zur Herstellung von faserverstärktem Halbzeug (10) in Form von Metallbändern aus zumindest einer Faserlage, die mehrere voneinander beabstandete und parallel angeordnete, lange bis endlose Verstärkungsfasern (14) und ein die Verstärkungsfasern (14) zumindest bereichsweise umgebendes Metall umfasst, wobei das Metall mit den Verstärkungsfasern (14) zumindest bereichsweise einem Schweißverfahren unterzogen wird, bei dem eine Verbindung durch ein flächiges Aufschmelzen des Metalls zu einer die Verstärkungsfasern (14) umgebenden Matrix (12) erfolgt, und wobei als Schweißverfahren ein Energiestrahlschweißverfahren, vorzugsweise ein Laserschweißverfahren oder ein Elektronenstrahlschweißverfahren, mittels einer stationären Strahlenkanone (20) verwendet wird, **dadurch gekennzeichnet, dass** die Verstärkungsfasern (14) und das Metall die stationäre Strahlenkanone (20) kontinuierlich durchlaufen, wobei vor dem Schweißverfahren die Verstärkungsfasern (14) mit einem Metallmantel (16) versehen werden, der nach dem Schweißverfahren das Metall der Matrix (12) bildet, oder die Verstärkungsfasern (14) zwischen zwei Metallfolien (34) angeordnet werden, und jeweils zwischen den Verstärkungsfasern (14) ein Metalldraht (38) eingebracht wird, und die Metallfolien (34) und der Metalldraht (38) nach dem Schweißverfahren das Metall der Matrix (12) bilden.

2. Verfahren nach Anspruch 1, **dadurch gekennzeichnet, dass** zumindest das Schweißverfahren in einer Atmosphäre ohne reaktive Gase erfolgt, wie Vakuum bei Elektronenstrahlschweißen oder Inertgas-Atmosphäre bei Laserstrahlschweißen.

3. Verfahren nach Anspruch 1 oder 2, **dadurch gekennzeichnet, dass** das Metall der Metallfolie (34) dem Metall des Metalldrahtes (38) entspricht.

4. Verfahren nach einem der vorangehenden Ansprüche, **dadurch gekennzeichnet, dass** das die Matrix (12) bildende Metall ein beliebiges schweißbares Metall ist, insbesondere auf Basis von Titan.

5. Verfahren nach einem der vorangehenden Ansprüche, **dadurch gekennzeichnet, dass** die Verstärkungsfasern (14) die Elemente Silizium (Si), Kohlenstoff (C), Bor (B), Sauerstoff (O), Aluminium (Al) und/oder Stickstoff (N) umfassen.

6. Verfahren nach einem der vorangehenden Ansprüche, **dadurch gekennzeichnet, dass** nach dem Schweißen eine Konsolidierung des Halbzeugs (10) durchgeführt wird.

7. Verfahren nach Anspruch 6, **dadurch gekennzeichnet, dass** die Konsolidierung durch ein heiß-isostatisches Pressverfahren erfolgt.

8. Verfahren nach Anspruch 6 oder 7, **dadurch gekennzeichnet, dass** die Konsolidierung durch ein uniaxiales Heißpressen erfolgt,

## Claims

1. A process for the manufacture of fibre-reinforced semi-finished products (10) in the form of metal strips made of at least one fibre layer comprising a plurality of long to endless reinforcing fibres (14) which are positioned parallel to one another and spaced a certain distance apart and a metal which surrounds the reinforcing fibres (14) in certain areas at least, at least certain areas of the metal and the reinforcing fibres (14) being subjected to a welding process during which they are connected by means of the surface melting of the metal onto a matrix (12) surrounding the reinforcing fibres (14), the welding process used being an energy beam welding process, preferably a laser welding process or an electron beam welding process, carried out by means of a stationary beam welding gun (20),
**characterised in that**
the reinforcing fibres (14) and the metal run through the beam gun (20) continuously, the reinforcing fibres (14) being provided prior to the welding process with a metal coating (16) which forms the metal of the matrix (12) after the welding process, or the reinforcing fibres (14) being positioned between two metal foils (34) and a metal wire (38) being inserted between the reinforcing fibres (14) and the metal foils (34) and the metal wire (38) forming the metal of the matrix (12) after the welding process.

2. A process in accordance with claim 1,
**characterised in that**
at least the welding process is carried out in an atmosphere free of reactive gases, such as a vacuum for electron beam welding or an insert gas atmosphere for laser beam welding.

3. A process in accordance with claim 1 or 2,
**characterised in that**
the metal of the metal foils (34) is the same as the metal of the metal wire (38).

4. A process in accordance with one of the preceding claims,
**characterised in that**
the metal forming the matrix (12) is any weldable metal, in particular a titanium-based metal.

5. A process in accordance with one of the preceding claims,
**characterised in that**
the reinforcing fibres (14) comprise the elements silicon (Si), carbon (C), boron (B), oxygen (O), aluminium (Al) and/or nitrogen (Ni).

6. A process in accordance with one of the preceding claims,
**characterised in that**
after the welding the semi-finished product (10) is consolidated.

7. A process in accordance with claim 6,
**characterised in that**
the consolidation takes the form of a hot isostatic pressing process.

8. A process in accordance with claim 6 or 7,
**characterised in that**
the consolidation takes the form of a uniaxial hot pressing process.

## Revendications

1. Procédé de préparation d'ébauches (10) renforcées de fibres sous forme de bandes métalliques se composant d'au moins une couche de fibres qui comprend plusieurs fibres de renforcement (14) longues à sans fin, distantes les unes des autres et disposées parallèlement, et un métal entourant les fibres de renforcement (14) au moins par zones, le métal étant soumis avec les fibres de renforcement (14) à un procédé de soudage au moins par zones, dans le cadre duquel une liaison s'effectue par une fusion plane du métal en une matrice (12) entourant les fibres de renforcement (14), et un procédé de soudage par rayonnement d'énergie, de préférence un procédé de soudage au laser ou un procédé de soudage par faisceau d'électrons, étant utilisé comme procédé de soudage au moyen d'un canon stationnaire à rayons (20), **caractérisé en ce que** les fibres de renforcement (14) et le métal passent en continu par le canon stationnaire à rayons (20), les fibres de renforcement (14) étant pourvues avant le procédé de soudage d'une gaine métallique (16) qui forme après le procédé de soudage le métal de la matrice (12), ou les fibres de renforcement (14) étant disposées entre deux feuilles de métal (34), et un fil de métal (38) étant inséré respectivement entre les fibres de renforcement (14), et les feuilles de métal (34) et le fil de métal (38) formant après le procédé de soudage le métal de la matrice (12).

2. Procédé selon la revendication 1, **caractérisé en ce que** au moins le procédé de soudage a lieu dans une atmosphère dénuée de gaz réactifs, telle que le vide en cas de soudage par faisceau d'électrons ou une atmosphère de gaz inerte en cas de soudage au laser.

3. Procédé selon la revendication 1 ou 2, **caractérisé en ce que** le métal de la feuille de métal (34) correspond au métal du fil de métal (38).

4. Procédé selon l'une quelconque des revendications précédentes, **caractérisé en ce que** le métal formant la matrice (12) est un métal soudable quelconque, en particulier à base de titane.

5. Procédé selon l'une quelconque des revendications précédentes, **caractérisé en ce que** les fibres de renforcement (14) comprennent les éléments silicium (Si), carbone (C), bore (B), oxygène (O), aluminium (Al) et/ou azote (N).

6. Procédé selon l'une quelconque des revendications précédentes, **caractérisé en ce qu'**après le soudage une consolidation de l'ébauche (10) est réalisée.

7. Procédé selon la revendication 6, **caractérisé en ce que** la consolidation se fait par un procédé de compression isostatique à température élevée.

8. Procédé selon la revendication 6 ou 7, **caractérisé en ce que** la consolidation se fait par une compression uniaxiale à chaud.
